# EUROPEAN PATENT SPECIFICATION

(11) **EP 3 060 072 B1**
(45) Date of publication and mention of the grant of the patent: **25.04.2018**
(21) Application number: 13895809.5
(22) Date of filing: 21.10.2013
(51) Int. Cl.: A23L 27/26

(54) **FAT ACTIVATION WITH SEAWEED**
FETTAKTIVIERUNG MIT ALGEN
ACTIVATION LIPIDIQUE À L'AIDE D'ALGUES

(43) Date of publication of application: 31.08.2016
(73) Proprietor: Nestec S.A., 1800 Vevey (CH)
(72) Inventor: QIN, Lan, Shanghai 200237 (CN); KONG, Shuhua, Shanghai 200237 (CN)
(74) Representative: Mollet, Beat Max
(86) International application number: PCT/CN2013/085578
(87) International publication number: WO 2015/058330

(56) References cited:
- EP-A1- 0 462 838
- WO-A2-2013/087420
- CN-A- 1 904 011
- CN-A- 101 214 042
- CN-A- 102 246 946
- JP-A- 2006 034 264
- GANDEMER GILLES: "Lipids and meat quality: Lipolysis, oxidation, Maillard reaction and flavour", SCIENCES DES ALIMENTS, LAVOISIER ABONNEMENTS, PARIS, FR, vol. 19, no. 3-4, 1 January 1999 (1999-01-01), pages 439-458, XP009158600, ISSN: 0240-8813
- Anonymous: "Inhibition of Lipid Peroxidation by Extracts from Enteromorpha prolifera (Muell.) J.Ag.", Internet , 2009, XP002767337, Retrieved from the Internet: URL:http://www.spkx.net.cn/EN/abstract/abs tract13289.shtml [retrieved on 2017-02-14]
- QI H ET AL: "Antioxidant activity of different sulfate content derivatives of polysaccharide extracted from Ulva pertusa (Chlorophyta) in vitro", INTERNATIONAL JOURNAL OF BIOLOGICAL MACROMOLECULES, ELSEVIER BV, NL, vol. 37, no. 4, 15 December 2005 (2005-12-15), pages 195-199, XP027766786, ISSN: 0141-8130 [retrieved on 2005-12-15]
- HEO S J ET AL: "Antioxidant activities of enzymatic extracts from brown seaweeds", BIORESOURCE TECHNOLOGY, ELSEVIER BV, GB, vol. 96, no. 14, 1 September 2005 (2005-09-01), pages 1613-1623, XP027800770, ISSN: 0960-8524 [retrieved on 2005-09-01]

## Description

The present invention relates to a method for accelerating oxidation of a fat composition for a use in the preparation of food flavoring compositions. The activated fat composition can be used in food compositions such as concentrated seasoning or flavoring products, condiments, sauces, gravies or ready-to-eat food products. Oxidation of fat is known to generate many natural flavour compounds. There is an interest in the food industry to make good use of those flavour compounds and to have them for example integrated into flavour reaction processes such as Maillard reactions, in order to enhance the generation of certain flavour notes, such as more meaty or fatty flavours. Animal fats, such as beef or chicken fat, are usually treated in controlled thermal oxidation reactions and then used as precursors in a Maillard reaction process. But animal fat is not always easily oxidised and high temperatures and long reaction times are required. Thus, the cost of processing is high and not sustainable for industrial production.

Sun B. et al. in Food Science, 2005, 26(4): 133-136, disclosed a study of determining optimal processing conditions of tallow oxidation. Thereby, temperatures of 140°C and processing times of 3 hours and longer were required for the specific reaction conditions used.

Another method of fat activation is enzymatic hydrolysis which breaks down fat into free fatty acids and smaller fatty acid chains. However, this method is less effective in the generation of low molecular weight flavour compounds and hence less efficient than the classical thermal activation of fat.

CN102246946 discloses the preparation of a meat flavour precursor. The method involves adding phosphate buffer to fat, adding lipase to fat, performing enzymolysis, followed by an oxidation reaction. The precursor can be further submitted to a Maillard reaction.

WO2013/087420 discloses a process for preparing a flavour concentrate having a meat flavour and/or aroma, comprising contacting animal lipid with a lipase enzyme and heating the mixture with an aqueous solution containing at least one reducing sugar and at least one amino acid to give the flavour concentrate.

Furthermore, it is known in the art that certain metal ions such as Co, Cu, Fe, Mn or Ni ions can work as catalysts for accelerating the oxidation reaction of fat. Evidence for this is for example provided by Belitz H.D. et al. in Food Chemistry, third revised Edition, pages 198-200. However, today's consumers clearly prefer food products that are made entirely with natural, authentic and fresh ingredients. An addition of chemicals for providing metal ions into a food seasoning product is much less appreciated by consumers. However, natural food ingredients rich in metal ions exist and are well known in the art. Garcia-Casal M.N. et al. in Journal of Nutrition, 2007, 137: 2691-2695, for example disclose that certain marine algae, collectively also named as seaweeds, contain high content of iron ions reaching from 157 mg/100g to 196 mg/100g algae. Red mushroom as another alternative natural food ingredient source contains 235.1 mg/100g mushroom material (China Food Composition 2012 version, the 2nd Edition, p57, edited by National Institute of Nutrition and Food Safety, China CDC).

Hence, there is a persisting need in the food industry to find new and better solutions to oxidase fat such as animal fat tallow more efficiently, at lower temperatures and therefore more cost effective, and for shorter reaction times.

The object of the present invention is to improve the state of the art and to provide an improved solution to overcome at least some of the inconveniences described above. Particularly, the object of the present invention is to provide a new process for fat oxidation which is industrially feasible and more cost effective than known processes in the art, and where the process still relies on all natural and authentic ingredients.

The object of the present invention is achieved by the subject matter of the independent claims. The dependent claims further develop the idea of the present invention.

Accordingly, the present invention provides in a first aspect a method for accelerating oxidation of a fat comprising the steps of:
a) hydrolyzing the fat to form a hydrolyzed fat composition;
b) activating the hydrolyzed fat composition in the presence of a seaweed for a time period from 1 to 6 hours at a temperature from 100°C to 140°C, preferably from 110°C to 130°C, wherein the seaweed is present in an amount of at least 0.5wt% of the hydrolyzed fat composition.
An activated fat composition is obtained by the method of the present invention. A method for improving the flavor of a food composition comprising the step of adding the activated fat composition of the present invention to the food composition, and then optionally further processing said food composition in a flavor reaction process, such as for example a Maillard reaction process, to result in a flavor reaction product can be provided. A food product comprising the activated fat composition or the flavor reaction product of the present invention can be provided. The inventors have evaluated the use of iron provided in the form as a chemical and in the form of different natural sources as an ingredient for a use in the process of fat oxidation. Thereby, they have first observed that iron ions when provided in free chemical form accelerate oxidation significantly. Evidence for this is provided below in Example 1, where an addition of 0.14 wt% ferrous gluconate increases the P-AV value from 0.33 (the negative control without iron) to a P-AV value of 2.48 (with the iron). The addition of iron in an equivalent molar amount in the form of a natural source ingredient from e.g. red mushroom into the fat oxidation reaction had very little to no significant catalysis effect. As can be seen in the Example section, the P-AV value after the addition of red mushroom increased only slightly to 0.63 in comparison to the negative control without iron.

However, it was surprisingly found by the inventors that when an equal molar amount of iron was provided to the fat oxidation reaction in the form of a seaweed powder, the rate of fat oxidation increased dramatically. The most significant increases in the oxidation reaction were observed when seaweed powder from the green algae Chlorophyta of the species Enteromorpha prolifera and Enteromorpha clathrata were used. But also powders from the Laminaria, a member of the brown algae Phaeophyta, more commonly known as kelp, showed a significant increase in the oxidation reaction over the control powder with red mushroom. Further, even the powder from a Porphyra, a member of the red algae Rhodophyta, showed an increased oxidation reaction rate if compared to the red mushroom powder; and this although the powder from the Porphyra and Laminaria comprised significantly less iron than the red mushroom powder. Details and further results are provided herein in the Example section below.

Therefore, oxidation of fat can now be accelerated significantly in a simple and natural authentic way by adding food grade powder of seaweed to an activating heat treatment reaction with fat and/or hydrolyzed fat. Thereby, on one hand the speed of the oxidation reaction will be accelerated and on a second hand flavor and taste compounds and precursors thereof are produced more readily and more efficiently. The resulting activated fat composition is therefore richer in natural flavor compounds. Furthermore, the activated fat composition is also richer in natural precursors of still further flavor compounds which can for example be activated by making use of such activated fat composition as ingredient in further process flavor reactions. Evidence of this is shown in Example 5, where the activated fat composition of the present invention was used as an ingredient in a further thermal Maillard reaction process and the resulting flavor concentrate tested with a trained sensory human panel for the presence and intensity of specific flavor attributes.

Hence, the present invention is able to reduce the temperature and time used for a thermal activation of fat or fat compositions. This results in more intense and new flavor rich activated fat compositions. The fact that the fat activation reaction can now be carried out at lower temperatures, e.g. at and below temperatures of 140°C, preferably at 130°C and below, the reaction composition has to be heated much less and for less long. This results: i) in a much lesser loss of volatile low-molecular weight flavor compounds from the reaction composition during the thermal processing, and consequently a more flavor rich activated fat composition; and ii) in a reduction of processing costs due to less costs of energy for the heating reaction and saving of time due to the shorter processing reaction. Furthermore, the use of seaweed is very natural and does not be declared as a chemical compound. Seaweeds also have a very positive image with consumers, also in regard as a natural source of providing iron, and a use in food products is therefore very well appreciated.

### Brief Description of the Drawings

Figure 1: Plotted p-AV values of activated beef fat obtained with or without seaweed Enteromorpha prolifera 5 wt% at different temperatures.
Figure 2: Plotted p-AV values of activated beef fat with or without seaweed Enteromorpha prolifera 5 wt% for different time periods.
Figure 3: Plotted p-AV values of activated beef fat with different amounts of seaweed Enteromorpha prolifera used during the activation step of the method.
Figure 4: Sensory profiling of the STB (savory thermal base) with activated fat of the present invention and with raw fat (Figure 4A with using beef fat; Figure 4B with using chicken fat) .
Figure 5: The volatile flavour compounds of beef STB with 6% raw beef fat as a control are shown in Figure 5A; and the beef STB with 4% activated beef fat according to the present invention are shown in Figure 5B.

### Detailed Description of the invention

The present invention pertains to a method for accelerating oxidation of a fat comprising the steps of:
a) hydrolyzing the fat to form a hydrolyzed fat composition;
b) activating the hydrolyzed fat composition in the presence of a seaweed for a time period from 1 to 6 hours at a temperature from 100°C to 140°C, preferably from 110°C to 130°C.

The term "seaweed" refers herein to macroscopic, multicellular marine algae and includes members of the red algae (Rhodophyta), the brown algae (Phaeophyta) and the green algae (Chlorophyta).

The fat of the present invention can be an animal fat, e.g. selected from beef fat (tallow), chicken fat, mutton fat or lamb fat, pork fat such as lard. The fat can also be of animal milk origin as for example milk fat, cream, butter, cheese, anhydrous milk fat. The fat of the present invention can also be an oil from plant origin as for example sunflower oil, peanut oil, walnut oil, rattan pepper oil, rap oil, soya oil, corn oil, olive oil or sesame oil. It can also be for example cocoa butter or other solid fats from plant origin. Preferably, however, the fat is an animal fat. More preferably, the fat is selected from beef fat, chicken fat, lamb fat and pork fat. Those fats are advantageously used in the present invention, as activated fats are mostly used in the preparation of flavoring and seasoning compositions for culinary food products where they provide an enhanced organoleptic experience of meaty and fatty flavors. Such flavors are best provided by fats originating from such meat origins like beef, chicken, lamb or pork, where they contribute additionally also with their intrinsic flavor profiles.

Preferably, the hydrolysis in step a) of the present method is an enzymatic hydrolysis, preferably with making use of a lipase enzyme. Thereby, the hydrolysis in this step a) may be at a temperature from 40°C to 60°C, preferably from 45°C to 55°C. The advantage of using enzymatic hydrolysis over e.g. chemical or other physical hydrolysis methods is that a substantially complete hydrolysis of the fat material can be obtained and this without the use of any harsh chemicals or other dangerous interventions. Furthermore, the hydrolysis reaction can be kept at relatively low temperatures to minimize the loss of any volatile low molecular weight flavor compounds present in the reaction and limiting the costs of heating such reaction volumes. The lipase enzyme for this enzymatic hydrolysis step may be for example lipaseS lipozyme TL from Novozymes, Validase lipase AN or Validase lipase MJ from DSM. The enzymes are typically added to the hydrolysis reaction in an amount from 100 to 1500 mg per 100 g of fat. The seaweed in step b) of the method of the present invention is present in an amount of at least 0.5 wt% of the total hydrolyzed fat composition. Typically, the amount of seaweed is not more than about 20 wt% of the total hydrolyzed fat composition. Preferably, the amount of seaweed is in an amount from 1.0 to 10 wt%, more preferably in an amount from about 3 wt% to 7 wt% of the total hydrolyzed fat composition. The optimal catalytic efficiency, i.e. between costs of adding seaweed and oxidative yield, is between 3 and 7 wt% as exemplified below.

Preferably, the seaweed in step b) of the present method is added in a powdered or paste form to the fat or to the hydrolyzed fat composition. This is the most industrially practical and cost effective way. Thereby, the powdered or pasty seaweed can already be added to the fat either before, during or after the hydrolysis step a) of the present method; or to the hydrolyzed fat composition in step b) either before or during the reaction time period.

The seaweed in step b) of the method of the present invention is a green algae such as Chlorophyta, a brown algae such as Phaeophytha, or a red algae such as Rhodophyta. The seaweed can also be a combination of members of either two or all three of these algae groups.

In a preferred embodiment, the seaweed in step b) of the method of the present invention is a green algae, i.e. a Chlorophyta, and preferably selected from the genus Ulva or Enteromorpha. Most preferably, the seaweed is Enteromorpha prolifera or Enteromorpha clathrata.

In a further preferred embodiment, the time period in step b) of the method of the present invention is from 1.5 to 3.5 hours, preferably from 1.5 to 3.0 hours. Even more preferably the time period is from about 2.0 to 2.5 hours. The shorter the time period, the less volatile compounds are lost during the heating step and the less the process costs money. An activated fat composition is obtained by the method of the present invention. A method for improving the flavor of a food composition comprising the step of adding the activated fat composition of the present invention to said food composition. Preferably, the food composition comprising the added activated fat composition is further processed in a flavor reaction process, preferably in a Maillard reaction process, to result in a flavor reaction product can be provided. A food product comprising the activated fat composition or the flavor reaction product of the present invention as described can be provided. The food product can be a concentrated seasoning or flavoring product, a condiment, a sauce, a gravy or a ready-to-eat food product.

Those skilled in the art will understand that they can freely combine all features of the present invention disclosed herein. In particular, features described for the method for accelerating oxidation of a fat of the present invention can be combined with the method for improving the flavor of a food composition and with the product claims of an activated fat composition and the food product of the present invention; and vice versa. Further, features described for different embodiments of the present invention may be combined.

Further advantages and features of the present invention are apparent from the figures and following examples.

### Example 1:

### Activation of fat: Method and Results

In a first step: Enzymatic hydrolysis of beef fat (tallow) was carried out after the addition of 10 wt% water and 0.5 wt% lipase (Lipozyme TL 100L from Novozymes) to the fat and incubation at 45°C for 2.5 hours in a temperature controlled reaction vessel.

In a second step: Catalysts were added to the hydrolyzed beef fat as specified in Table I. The mixture was then thermally treated under the conditions as specified in Table I. Thereafter, the mixture, i.e. the activated fat composition, was cooled to room temperature.

The degree of fat oxidation in the activated fat composition was then determined according to the official method provided by the International Organization for Standardization(ISO 6885:2006(E)), i.e. by measuring the presence of secondary oxidation products such as aldehydes and ketones by reacting them with p-Anisidine to form products that absorb at 350 nm wavelength of light. P-AV absorption values of the different mixtures were then determined, whereby the P-AV value is higher the more secondary oxidation products have been built in the fat composition. A P-AV value close to 0 (zero) indicates an absence of secondary oxidation products and hence very little to no fat oxidation. A high P-AV value is indicative to the amount of secondary oxidation products present in the fat mixtures and hence the degree of fat activation.

The P-AV value results are indicated in Table I.

**Table I**

| Results of fat activation are as follows: | | | | |
|---|---|---|---|---|
| **Sample** | **Added catalyst** | **Reaction temperature** | **Reaction time** | **P-AV value** |
| 1 | -none - | 115°C | 2.5 hours | 0.33 |
| 2 | Enteromorpha prolifera: powder, 5 wt% | 115°C | 2.5 hours | 23.40 |
| 3 | Porphyra marginata: powder, 5 wt% | 115°C | 2.5 hours | 0.78 |
| 4 | Laminaria jiponica: powder, 5 wt% | 115°C | 2.5 hours | 1.33 |
| 5 | Enteromorpha clathrata: powder, 5 wt% | 115°C | 2.5 hours | 15.96 |
| 6 | Ferrous gluconate: 0.14 % | 115°C | 2.5 hours | 2.48 |
| 7 | Red mushroom powder: 5wt% | 115°C | 2.5 hours | 0.63 |
| 8 | -none - | 125°C | 2.5 hours | 28.47 |
| 9 | Enteromorpha prolifera: powder, 5 wt% | 125°C | 2.5 hours | 45.66 |

All samples were reacted under air pumping of 2.5 L/min per 100g fat.

For each catalyst used in the present example, the proper content of iron was determined according to standard technique and is as shown in Table II.

**Table II**

| Amounts of iron provided by the catalysts used in the samples in the fat activation process: | | |
|---|---|---|
| **Sample** | **Added catalyst** | **Amount of iron provided with the catalyst in wt% of sample** |
| 1 | -none - | 0 wt% |
| 2 | Enteromorpha prolifera: powder, 5 wt% | 0.014 wt% |
| 3 | Porphyra marginata: powder, 5 wt% | 0.0027 wt% |
| 4 | Laminaria jiponica: powder, 5 wt% | 0.00023 wt% |
| 5 | Enteromorpha clathrata: powder, 5 wt% | 0.014 wt% |
| 6 | Ferrous gluconate: 0.14 % | 0.017 wt% |
| 7 | Red mushroom powder: 5wt% | 0.012 wt% |
| | | |
| 8 | -none - | 0 wt% |
| 9 | Enteromorpha prolifera: powder, 5 wt% | 0.014 wt% |

Hence, samples 2, 5, 6, 7 and 9 all comprise about equimolar amounts of iron in the fat activation reaction. However, samples 3 and 4 comprise significantly less total amounts of iron.

The results indicate that free iron ions can act as a fat oxidation catalyst: P-AV value of sample 6, which comprises ferrous gluconate, is clearly elevated in comparison to the negative control sample 1, which does not comprise added iron. Red mushroom powder (sample 7), although comprising about the same amount of iron as sample 6 does not substantially act as a catalyst in this reaction.

It is evident from the above results, that powders from the different seaweeds as indicated in Table I (i.e. Samples 2-5) and comprising similar or even lower amounts of iron as samples 6 and 7, act as catalyst in the fat activation process. Particularly, it is evident from samples 2 and 5, that seaweed powder from Enteromorpha, i.e. Enteromorpha prolifera and Enteromorpha clathrata, perform very well as catalyst and are the most preferred solutions of the present invention. Seaweed powder from the brown algae Laminaria (sample 4) performs also clearly above the negative and the red mushroom powder control samples 1 and 7, as well as the powder from Porphyra (a red algae type); and this despite the fact that those seaweed powders comprise much lesser amounts of iron. Hence, all tested seaweed powders perform better as a catalyst in the presented method for accelerating oxidation of a fat, than the use of another biological material, red mushroom powder, which has about the same equimolar amount of iron as those powders from the green algae seaweeds.

These results are further confirmed at a reaction temperature of 125°C, where sample 9 is still providing a better fat oxidation result than sample 8.

### Example 2:

### Effect of seaweed as a catalyst as to reaction temperature in the fat oxidation reaction

The effect of the reaction temperature as to the acceleration of the oxidation reaction with and without the presence of seaweed was determined. The same experimental process as described in Example 1 was used.

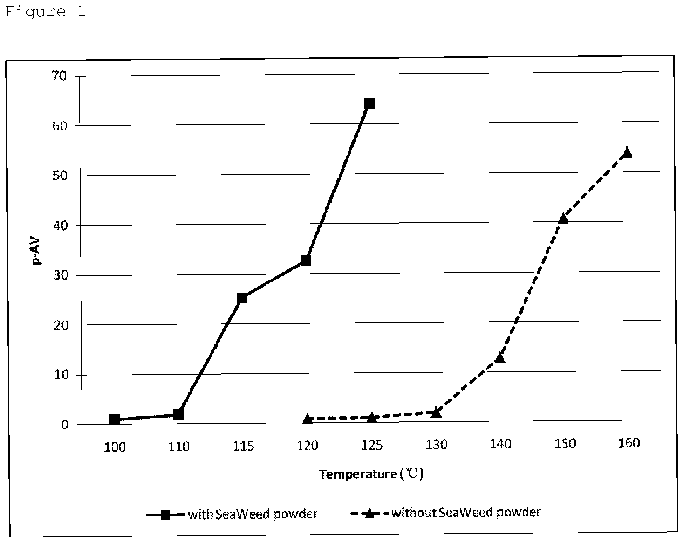

The experiment was repeated in the same way as for sample 1 and 2 in Example 1, with the exception that the temperature of the activation reaction was varied between 100°C and 160°C. The P-AV value of the different reaction end-products were then determined as described above. The results are shown in Figure 1.

It can be concluded from those results that the sample without a catalyst only started to generate secondary oxidation products when heat-treated for 2.5 hours from about 130°C temperature upwards. The sample with seaweed as a catalyst, however, started to generate such secondary oxidation products when heat-treated under the same conditions already at about 110°C. At 125°C already a very substantial part of secondary oxidation products is generated, superior as to what the control samples can generate at e.g. 160°C.

### Example 3:

### Effect of seaweed as a catalyst as to the time requirement for the fat oxidation reaction

The effect of the reaction time period as to the acceleration of the oxidation reaction with and without the presence of seaweed was determined. The same experimental process as described in Example 1 was used.

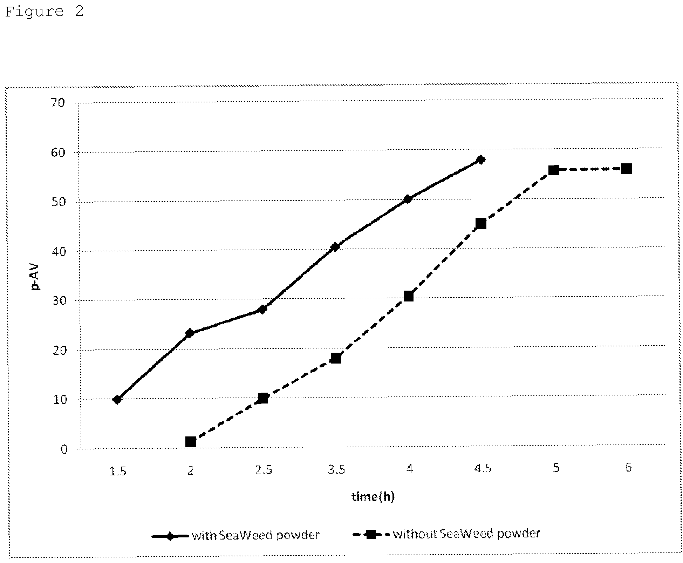

The experiment was repeated in the same way as for sample 1 and 2 in Example 1, with the exception that the reaction time period was varied from 1 to 6 hours. The P-AV value of the different reaction end-products were then determined as described above. The results are shown in Figure 2.

It can be concluded from those results that the sample without a catalyst only started to generate secondary oxidation products when heat-treated for at least 2 hours or longer. The sample with seaweed as a catalyst, however, started to generate such secondary oxidation products when heat-treated under the same conditions already earlier and produced already after 1.5 hours a P-AV value higher than what can be observed with the control sample after 2.5 hours. At 2.5 hours, the sample with the presence of seaweed already generated substantial amounts of secondary oxidation products, whereas the sample without a catalyst is still in the early phase of starting to generate such compounds.

### Example 4:

### Effect of dosage of seaweed to the acceleration of the fat oxidation reaction

The effect of different amounts of seaweed added to the fat activation reaction was determined. The same experimental process as described in Example 1 was used.

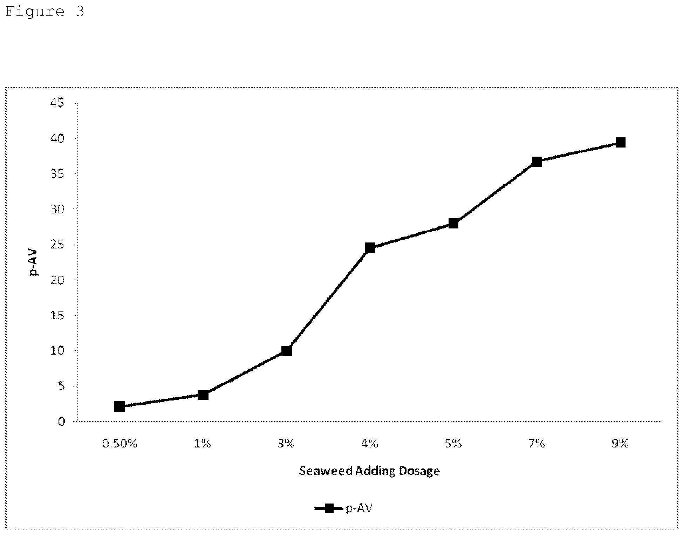

The experiment was repeated in the same way as for sample 2 in Example 1, with the exception that the amount of added seaweed was varied between 0.5 and 9 wt%. The P-AV value of the different reaction end-products were then determined as described above. The results are shown in Figure 3.

It can be concluded from those results that the samples with an amount of 0.5 wt% seaweed or more are generating secondary oxidation products. It further can be seen that in this specific experimental set-up a saturation of the catalytic effect is reached with the addition of about 9 wt%, or slightly above, of added seaweed to the reaction mixture. An optimal amount of seaweed can be determined to be between ca. 3 wt% and 7 wt% of added seaweed.

### Example 5:

### Sensory profiling of process flavors with activated versus non activated fat

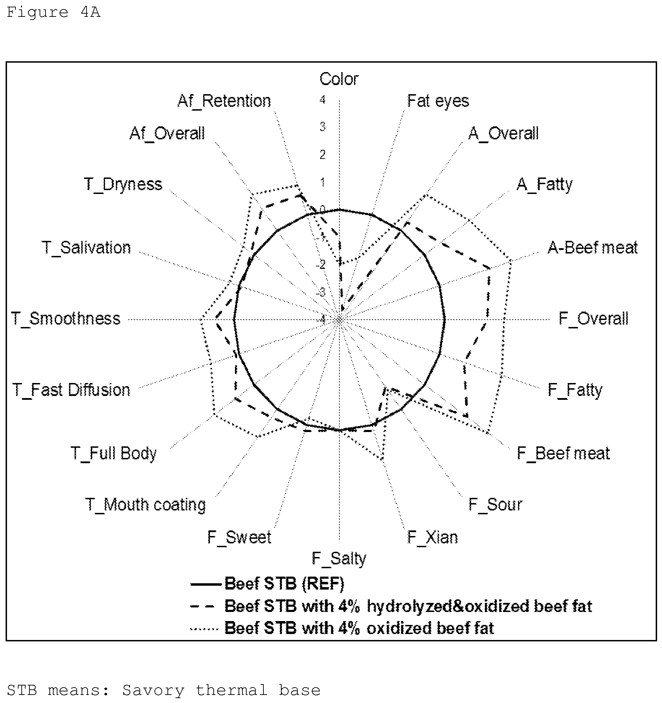

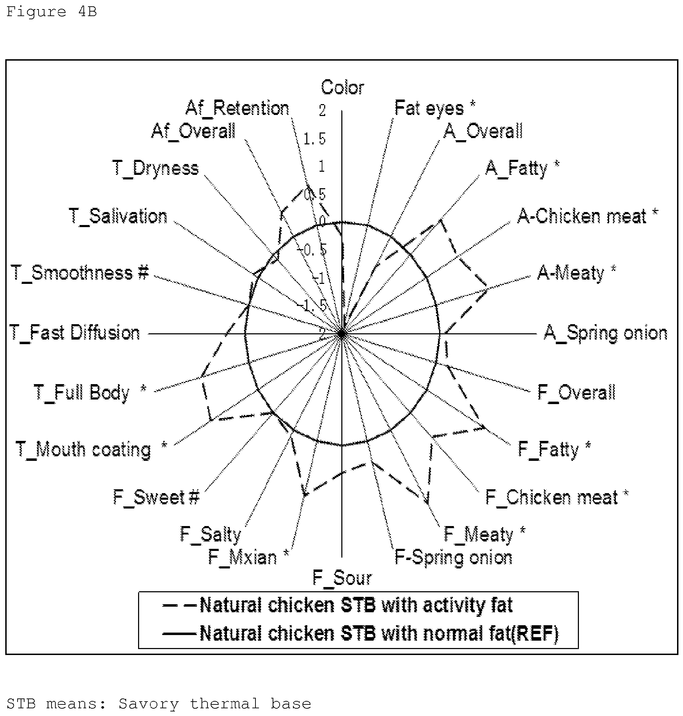

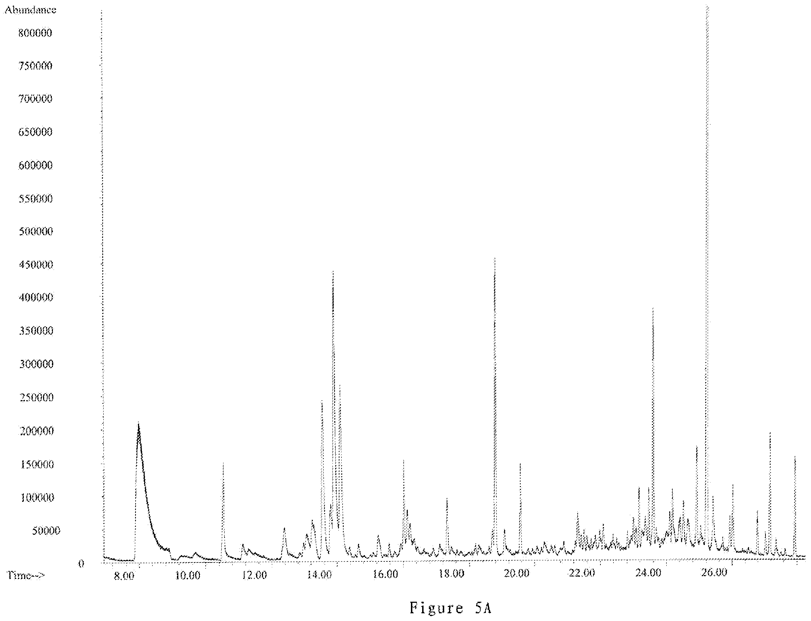

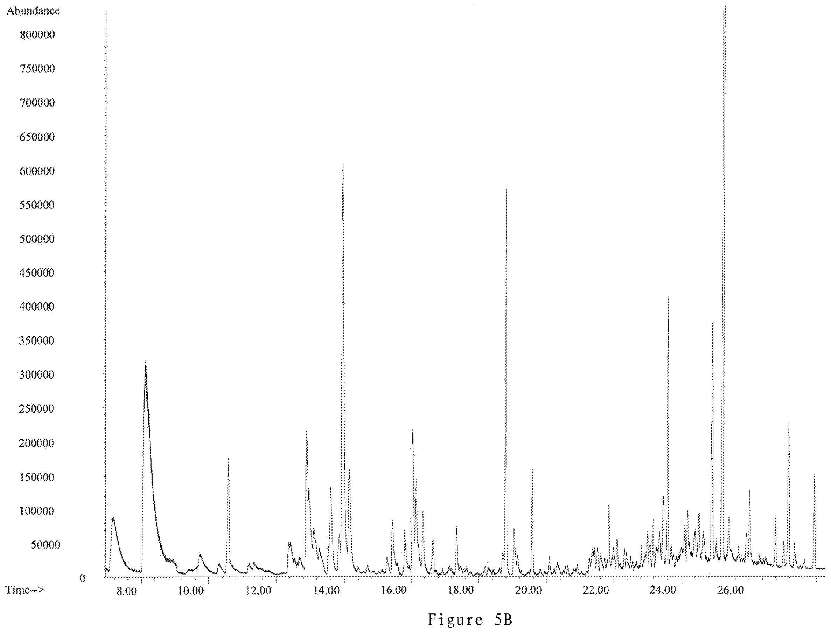

To verify the influence of the activated fat composition when further used as an ingredient into a Maillard process flavor reaction, an activated beef fat composition, i.e. Sample 2 of Example 1, as well as a chicken fat composition, prepared in the same way as Sample 2 but with chicken fat instead of beef fat, was added to the reaction mixture of a Maillard flavor reaction and further processed. For this, 4 wt% of the activated fat compositions per total reaction mixture was integrated into a beef or chicken flavor seasoning reaction mixture as disclosed in document WO2012/080175A1, Example 1 and 2 respectively, and further processed as described in said document to obtain a savory thermal base (STB). Comparative results, with and without added activated fat compositions, were then evaluated by a professional sensory panel and by GC-MS analysis. The results are shown in Figures 4 and 5, respectively.

As can be seen from Figure 4A, the beef flavor reaction product with the corresponding activated beef fat expresses a significantly stronger and more pronounced meaty and fatty note than the corresponding reaction product without the addition of the activated beef fat. The same is true for the chicken flavor reaction product as can be seen in Figure 4B. Therein, the activated chicken fat contributed significantly to the stronger chicken flavor note, full body and mouth coating, and meaty note than the corresponding reaction product without the addition of the activated chicken fat.

### Example 6:

### GC-MS analysis of process flavors with activated versus non activated fat

The samples as prepared for Example 5 were further analyzed for volatile compounds using GC-MS technology.

The volatiles compounds were sampled with an SPME-fibre (75µm, carboxen/polydimethylsiloxane) and separated with a gas chromatograph-mass spectrometer (Finnigan trace GC/MS, Finnigan, USA). First, the beef STB was dissolved with water at the dosage of 1.2g/100ml hot water. 3g solution was weighted and placed in a 15ml vial. The vial was sealed with PTFE/BYTL septum and equilibrated at 55°C for 30min, with the presence of SPME- fibre in the headspace. After the equilibration time, the injection was conducted in a split less mode for 3min at 250°C. The volatile compounds were separated with a capillary column DB-WAX (30 m × 0.25 mm × 0.25µm; J&W Scientific, Folsom, CA, USA). The separation was performed as follows: the oven temperature was held at 40°C for 3min, ramped to 100°C at the rate of 5°C/min and then to 230°C at 12°C/min and maintained at 230°C for 10min. Helium (99.999%) was used as carrier gas at a linear velocity of 1.8ml/min. The compounds were analysed by MS. Mass spectra was obtained in the electron impact mode with an energy voltage of 70ev and emission current of 35Ua. The detector was set at a scanning range of 35-450m/z at a rate of 4.45scans/s. Identification of the volatile compounds was carried out by comparison of their mass spectra with the Wiley, NIST and Replib libraries and also by comparing their Kovats indices (KIs) with those of standard compounds and data from the literature. Linear KIs of the compounds were calculated, using a series of n-alkanes injected under the same chromatographic conditions and compared with available literature data. The identified volatile compounds were quantified by GC/MS. The areas of the peaks were measured by calculating the total ion current.

These findings are confirmed in the GC-MS results as presented in Figures 5A and 5B. The volatile flavour compounds of beef STB with 6% raw beef fat as a control are shown in Figure 5A, while the beef STB with 4% activated beef fat according to the present invention are shown in Figure 5B.

The results showed that more volatile flavor compounds with stronger flavor intensity are released from the beef reaction product with the added activated beef fat composition (Figure 5B), than where not activated beef fat was added (Figure 5A). Particularly, it could be observed that more aldehyde and furan compounds which contribute to a fatty and meaty flavor were released from the reaction product with the activated fat.

## Claims

1. A method for accelerating oxidation of a fat comprising the steps of :
a. hydrolyzing the fat to form a hydrolyzed fat composition;
b. activating the hydrolyzed fat composition in the presence of a seaweed for a time period from 1 to 6 hours at a temperature from 100°C to 140°C, preferably from 110°C to 130°C, wherein the seaweed is present in an amount of at least 0.5 wt% of the hydrolyzed fat composition.

2. The method according to claim 1, wherein the fat is an animal fat.

3. The method according to claim 2, wherein the fat is selected from beef fat, chicken fat, lamb fat, pork fat or milk fat.

4. The method according to one of the claims 1-3, wherein the hydrolysis in step a) is an enzymatic hydrolysis, preferably with making use of a lipase enzyme.

5. The method according to one of the claims 1-4, wherein the hydrolysis in step a) is at a temperature from 40°C to 60°C, preferably from 45°C to 55°C.

6. The method according to one of the claims 1-5, wherein the seaweed in step b) is present in an amount of at least 1.0 wt% of the hydrolyzed fat composition, preferably in an amount from 1.0 to 10 wt% of the hydrolyzed fat composition.

7. The method according to one of the claims 1-6, wherein the seaweed in step b) is added in a powdered or paste form to the fat or to the hydrolyzed fat composition.

8. The method according to one of the claims 1-7, wherein the seaweed in step b) is a green algae such as Chlorophyta, a brown algae such as Phaeophyta, a red algae such as Rhodophyta, or a combination thereof.

9. The method according to claim 8, wherein the green algae Chlorophyta is Enteromorpha, preferably selected from Enteromorpha prolifera or Enteromorpha clathrata.

10. The method according to claim 8, wherein the brown algae is selected from Laminaria.

11. The method according to claim 8, wherein the red algae is selected from Porphyra.

12. The method according to one of the claims 1-11, wherein the time period in step b) is from 1.5 to 3.5 hours.

## Patentansprüche

1. Verfahren zum Beschleunigen der Oxidation eines Fettes, umfassend die folgenden Schritte:
a. Hydrolysieren des Fettes, um eine hydrolysierte Fettzusammensetzung zu bilden;
b. Aktivieren der hydrolysierten Fettzusammensetzung in Gegenwart einer Meeresalge für einen Zeitraum von 1 bis 6 Stunden bei einer Temperatur von 100 °C bis 140 °C, vorzugsweise von 110 °C bis 130 °C, wobei die Meeresalgen in einer Menge von mindestens 0,5 Gew.-% der hydrolysierten Fettzusammensetzung vorhanden ist.

2. Verfahren nach Anspruch 1, wobei das Fett ein tierisches Fett ist.

3. Verfahren nach Anspruch 2, wobei das Fett ausgewählt ist aus Rinderfett, Hühnerfett, Lammfett, Schweinefett oder Milchfett.

4. Verfahren nach einem der Ansprüche 1 bis 3, wobei die Hydrolyse in Schritt a) eine enzymatische Hydrolyse ist, vorzugsweise unter Verwendung eines Lipaseenzyms.

5. Verfahren nach einem der Ansprüche 1 bis 4, wobei die Hydrolyse in Schritt a) bei einer Temperatur von 40 °C bis 60 °C, vorzugsweise von 45 °C bis 55 °C stattfindet.

6. Verfahren nach einem der Ansprüche 1 bis 5, wobei die Meeresalge in Schritt b) in einer Menge von mindestens 1,0 Gew.-% der hydrolysierten Fettzusammensetzung, vorzugsweise in einer Menge von 1,0 bis 10 Gew.-% der hydrolysierten Fettzusammensetzung vorhanden ist.

7. Verfahren nach einem der Ansprüche 1 bis 6, wobei die Meeresalge in Schritt b) dem Fett oder der hydrolysierten Fettzusammensetzung in Pulver- oder Pastenform zugesetzt wird.

8. Verfahren nach einem der Ansprüche 1 bis 7, wobei die Meeresalge in Schritt b) eine Grünalge wie Chlorophyta, eine Braunalge wie Phaeophyta, eine Rotalge wie Rhodophyta oder eine Kombination davon ist.

9. Verfahren nach Anspruch 8, wobei die Grünalge Chlorophyta Enteromorpha ist, die vorzugsweise aus Enteromorpha prolifera oder Enteromorpha clathrata ausgewählt ist.

10. Verfahren nach Anspruch 8, wobei die Braunalge aus Laminaria ausgewählt ist.

11. Verfahren nach Anspruch 8, wobei die Rotalge aus Porphyra ausgewählt ist.

12. Verfahren nach einem der Ansprüche 1 bis 11, wobei der Zeitraum in Schritt b) von 1,5 bis 3,5 Stunden beträgt.

## Revendications

1. Procédé d'accélération de l'oxydation d'une matière grasse comprenant les étapes consistant à :
a. hydrolyser la matière grasse pour former une composition de matière grasse hydrolysée ;
b. activer la composition de matière grasse hydrolysée en présence d'une algue pendant une durée de 1 à 6 heures à une température de 100 °C à 140 °C, de préférence de 110 °C à 130 °C, l'algue étant présente en une quantité d'au moins 0,5 % en poids de la composition de matière grasse hydrolysée.

2. Procédé selon la revendication 1, dans lequel la matière grasse est une matière grasse animale.

3. Procédé selon la revendication 2, dans lequel la matière grasse est choisie parmi matière grasse de boeuf, matière grasse de poulet, matière grasse d'agneau, matière grasse de porc ou matière grasse laitière.

4. Procédé selon l'une des revendications 1 à 3, dans lequel l'hydrolyse à l'étape a) est une hydrolyse enzymatique, de préférence en utilisant une enzyme lipase.

5. Procédé selon l'une des revendications 1 à 4, dans lequel l'hydrolyse à l'étape a) est à une température de 40 °C à 60 °C, de préférence de 45 °C à 55 °C.

6. Procédé selon l'une des revendications 1 à 5, dans lequel l'algue à l'étape b) est présente en une quantité d'au moins 1,0 % en poids de la composition de matière grasse hydrolysée, de préférence en une quantité de 1,0 à 10 % en poids de la composition de matière grasse hydrolysée.

7. Procédé selon l'une des revendications 1 à 6, dans lequel l'algue à l'étape b) est ajoutée sous forme de poudre ou de pâte à la matière grasse ou à la composition de matière grasse hydrolysée.

8. Procédé selon l'une des revendications 1 à 7, dans lequel l'algue à l'étape b) est une algue verte telle que Chlorophyta, une algue brune telle que Phaeophyta, une algue rouge telle que Rhodophyta ou une combinaison de celles-ci.

9. Procédé selon la revendication 8, dans lequel l'algue verte Chlorophyta est Enteromorpha, de préférence choisie parmi Enteromorpha prolifera ou Enteromorpha clathrata.

10. Procédé selon la revendication 8, dans lequel l'algue brune est choisie parmi Laminaria.

11. Procédé selon la revendication 8, dans lequel l'algue rouge est choisie parmi Porphyra.

12. Procédé selon l'une des revendications 1 à 11, dans lequel la durée de l'étape b) est de 1,5 à 3,5 heures.
